# EUROPÄISCHE PATENTANMELDUNG

(11) **EP 4 592 369 A1**
(43) Veröffentlichungstag der Anmeldung: **30.07.2025**
(21) Anmeldenummer: 25150539.2
(22) Anmeldetag: 07.01.2025
(51) Int. Cl.: C09D 183/04

(54) **UV-HÄRTBARES BESCHICHTUNGSMATERIAL UND VERFAHREN ZUM UV-HÄRTEN VON BESCHICHTUNGSMATERIAL**

(30) Priorität: 15.01.2024 DE 202024100174 U
(71) Anmelder: NANO-X GmbH, 66130 Saarbrücken (DE)
(72) Erfinder: Sepeur, Stefan, 66787 Wadgassen (DE); Groß, Frank, 66663 Merzig (DE); Muth, Alexandra, 66450 Bexbach (DE)
(74) Vertreter: Patentanwaltskanzlei Vièl & Wieske PartGmbB

(57) **Zusammenfassung**

Die Erfindung betrifft ein UV-härtbares Beschichtungsmaterial aus nicht funktionalisierten Silanen und/oder Hydrolysaten von nicht funktionalisierten Silanen und/oder Silikonharzen und/oder Silikonen mit Resten an hydrolysierbaren Alkoxygruppen. Die Erfindung betrifft auch ein Verfahren zum UV-Härten von Beschichtungsmaterial.

Um ein UV-härtbares Beschichtungsmaterial aus nicht funktionalisierten Silanen, Mischungen von nicht funktionalisierten Silanen und Hydrolysaten von nicht funktionalisierten Silanen oder Mischungen von nicht funktionalisierten Silanen und Silikonharzen zu schaffen, wird im Rahmen der Erfindung vorgeschlagen, dass das Beschichtungsmaterial zwischen 1 Gew.-% und 10 Gew.-% kommerzielle kationische oder anionische UV-Starter enthält.

Überraschenderweise hat sich gezeigt, dass das Beschichtungsmaterial mittels UV-Strahlung bei Raumtemperatur innerhalb von einer Sekunde bis 10 Minuten, vorzugsweise innerhalb von 10 Sekunden bis 5 Minuten und besonders bevorzugt innerhalb von 1 Minute bis 3 Minuten gehärtet werden kann.

## Beschreibung

Die Erfindung betrifft ein UV-härtbares Beschichtungsmaterial aus nicht funktionalisierten Silanen und/oder Hydrolysaten von nicht funktionalisierten Silanen und/oder Silikonharzen und/oder Silikonen mit Resten an hydrolysierbaren Alkoxygruppen. Die Erfindung betrifft auch ein Verfahren zum UV-Härten von Beschichtungsmaterial.

UV-härtende Materialien sind allgemein bekannt. Sie enthalten meist Doppelbindungen oder Epoxide und können radikalisch oder ionisch durch die Einwirkung von UV-Strahlung gehärtet werden. Beispiele hierfür sind ungesättigte Acrylate oder ungesättigte Methacrylate sowie Epoxidharze.

UV-härtende Sol-Gel Materialien werden durch Hydrolyse und Kondensation von Silanen erhalten. Als Silane werden im Allgemeinen Acryl-, Methacryl-, Vinyl- oder Epoxysilane mit zwei oder drei hydrolysierbaren Gruppen eingesetzt. Beispiele hierfür sind Hydrolysate von 3-Glycidyloxypropyltrimethoxysilan GPTMS, 3-Glycidyloxypropyltriethoxysilan GPTES, 3-Glycidyloxypropylmethyldimethoxysilan, 3-Glycidyloxypropylmethyldiethoxysilan, 2-(3,4-Epoxycyclohexyl)-ethyltrimethoxysilan, 2-(3,4-Epoxycyclohexyl)-ethyltriethoxysilan, 3-Methacryloxypropyltrimethoxysilan MPTMS, 3-Methacryloxypropyltriethoxysilan MPTES, 3-Methacryloxypropyltrimethoxysilan, (3-Methacryloxypropyl-)methyldimethoxysilan, (3-Methacryloxypropyl-)methyldiethoxysilan, 3-Methacryloxymethylltrimethoxysilan, 3-Methacryloxypropyltriacetoxysilan, 3-Methacryloxypropyltriethoxysilan, 3-Acryloxypropyltrimethoxysilan, 3-Acryloxypropylmethyldimethoxysilan, 3-Acryloxymethyltrimethoxysilan, 3-Acryloxymethyltriethoxysilan, 3-Acryloxypropyltriacetoxysilan, 3-Acryloxypropyltriethoxysilan, 3-Acryloxypropylmethyldiethoxysilan, Vinyltrimethoxysilan, Vinyltriethoxysilan, Vinyldimethoxymethylsilan, Vinyldiethoxymethylsilan, Vinyltriacetoxysilan.

Aus dem Stand der Technik sind auch Materialien bekannt, bei denen Silane ohne Doppelbindungen cokondensiert werden, wie Methyltriethoxysilan (MTES), Tetraethoxysilan (TEOS), Phenyltriethoxysilan (PHTES), Propyltriethoxysilan (PTES), Dimethyldiethoxysilan (DMDES), Methyltrimethoxysilan (MTMS), Tetramethoxysilan (TEMOS), Tetra-n-propoxysilan, Tetra-n-butoxysilan, Phenyltrimethoxysilan (PHTMS), Propyltrimethoxysilan (PTMS), Dimethyldimethoxysilan (DMDMS), Isobutyltriethoxysilan, Isobutyltrimethoxysilan, Octyltriethoxysilan, Octyltrimethoxysilan, iso-Octyltriethoxysilan, iso-Octyltrimethoxysilan, Isooctyltriethoxysilan, Isooctyltrimethoxysilan, Hexadecyltrimethoxysilan, Hexadecyltriethoxysilan, 1,2-Bis(Triethoxysilyl)-ethan, 1,2-Bis(Trimethoxysilyl)-ethan, Trimethylethoxysilan, Trimethylmethoxysilan, (Cyclohexyl)methyldiethoxysilan, (Cyclohexyl)methyldimethoxysilan, Dicyclopentyldiethoxysilan, Dicyclopentyldimethoxysilan, Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, Dimethyldimethoxysilan, Diisopropyldimethoxysilan, Phenylimethyldimethoxysilan, Phenylethyltriethoxysilan, Phenylmethyldiethoxysilan und Phenyldimethylethoxysilan.

Essenziell für die UV-Härtung ist aber ein hoher Anteil von mindestens 25 Mol-% an Silanen mit funktionellen Gruppen, wie Doppelbindungen oder Epoxide.

Silane oder Mischungen von Silanen ohne eine organische funktionelle Gruppe, wie Methyltriethoxysilan (MTES), Tetraethoxysilan (TEOS), Phenyltriethoxysilan (PHTES), Propyltriethoxysilan (PTES), Dimethyldiethoxysilan (DMDES), Methyltrimethoxysilan (MTMS), Tetramethoxysilan (TEMOS), Tetra-n-propoxysilan, Tetra-n-butoxysilan, Phenyltrimethoxysilan (PHTMS), Propyltrimethoxysilan (PTMS), Dimethyldimethoxysilan (DMDMS), Isobutyltriethoxysilan, Isobutyltrimethoxysilan, Octyltriethoxysilan, Octyltrimethoxysilan, iso-Octyltriethoxysilan, iso-Octyltrimethoxysilan, Isooctyltriethoxysilan, Isooctyltrimethoxysilan, Hexadecyltrimethoxysilan , Hexadecyltriethoxysilan, 1,2-Bis(Triethoxysilyl)-ethan, 1,2-Bis(Trimethoxysilyl)-ethan, Trimethylethoxysilan, Trimethylmethoxysilan, (Cyclohexyl)methyldiethoxysilan, (Cyclohexyl)methyldimethoxysilan, Dicyclopentyldiethoxysilan, Dicyclopentyldimethoxysilan, Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, Dimethyldimethoxysilan, Diisopropyldimethoxysilan, Phenylimethyldimethoxysilan, Phenylethyltriethoxysilan, Phenylmethyldiethoxysilan und Phenyldimethylethoxysilan werden gemäß dem Stand der Technik thermisch oder bei Raumtemperatur gehärtet.

Zur Härtung bei Raumtemperatur werden meist ionische Starter, wie Alkoxyde von Zink, Zinn, Zirkonium, Aluminium, Wismut, beispielsweise Zink-Ethylhexanoat, Zink-Acetylacetonat, 2-Ethyl-Hexansäure Zinksalz, Zink(II)oktoat, Zinkcarboxylat, Dibutylzinndilaurat (DBTL), Zinn bis(2-ethylhexanoate), Dioctyl-Zinn-diketonat, Dioctyl-zinndi-dodecanoat, Dioctyltindiacetat, Zinn(II)chlorid wasserfrei, Zinn(II)-Sulfat, Zinn(II)-pyrophoshat Hydrat, Zirkoniumacetat, Zirkoniumoctoate, Zirkon-Ethylhexanoat, Aluminiumtri-sec-butylat, Aluminium-Butoxid-Acetylacetonat, Aluminiumcarboxylate, Titanbutylat, Titanacetylacetonat, Titan-di-isobutoxy-ethylacetoat, Bismuthcarboxylat, Bismut(III)neodecanoat, Bismut(2-ethylhexanoat)
oder Säurestarter, wie beispielsweise Phosphorsäure, phosphorige Säure, Alkylphosphorsäure (z.B. Methanphosphonsäure, Oktanphosphonsäure), Vinylphosphonsäure, oder Phosphorsäurester wie Phosphorsäuremonoethylester, Phosphorsäurediethylester, Phosphorsäuremomoisopropylester, Phosphorsäurediisopropylester, Phosphorsäuremonobutylester, Phosphorsäuredibutylester, Phosphorsäuremonooctylester, Phosphorsäuredioctylester, Phosphorsäuremonoisooctylester, Phosphorsäurediisooctylester, Dimethylsäurepyrophosphat, Monostearylphosphorsäureester ( CAS 29058-09-0), Distearylphosphorsäureester, Monocetylphosphorsäureester, Vinylphosphonsäuredimethylester, 2-Ethylhexanolpolyglykoletherphosphorsäureester (CAS 68439-39-4), eingesetzt.

Auch Acetate, tertiäre Ammoniumverbindungen wie Tetrabutylammoniumfluorid, Tetrabutylammoniumacetat, Tetrabutylammoniumhydroxid, (2-Hydroxyethyl)trimethylammoniumchlorid und Stickstoff haltige Katalysatoren wie 1,1,3,3, Tetramethylguanidin, 1,4-Diazabicyclo[2.2.2]octan, 1-Methylimidazol, 2-Ethylimidazol, Hydroxylaminnitrat, 1,8-Diazabicyclo[5.4.0]undec-7-ene (DBU) können als Starter dienen.

Die Härtung bei Raumtemperatur erfolgt dabei innerhalb von Stunden bis zu Tagen. Die Härtung bei höheren Temperaturen erfolgt, je nach Temperatur, innerhalb von Minuten bis mehrere Stunden.

Eine schnelle UV-Härtung solcher Materialien bei Raumtemperatur, d.h. eine Härtung innerhalb von 1 Sekunde bis 10 Minuten, ist bisher nicht bekannt.

Die Aufgabe der Erfindung besteht somit darin, ein UV-härtbares Beschichtungsmaterial aus nicht funktionalisierten Silanen, Mischungen von nicht funktionalisierten Silanen und Hydrolysaten von nicht funktionalisierten Silanen oder Mischungen von nicht funktionalisierten Silanen und Silikonharzen zu schaffen.

Diese Aufgabe wird erfindungsgemäß dadurch gelöst, dass das Beschichtungsmaterial zwischen 1 Gew.-% und 10 Gew.-% kommerzielle kationische oder anionische UV-Starter enthält.

Überraschenderweise hat sich gezeigt, dass nicht funktionalisierte Silane oder Hydrolysate von nicht funktionalisierten Silanen sowie Mischungen von nicht funktionalisierten Silanen und Silikonharzen durch Zusatz kationischer oder anionischer Starter mittels UV-Strahlung bei Raumtemperatur innerhalb von einer Sekunde bis 10 Minuten, vorzugsweise innerhalb von 10 Sekunden bis 5 Minuten und besonders bevorzugt innerhalb von 1 Minute bis 3 Minuten gehärtet werden können.

Die Beschichtungen sind meist transparent, können aber auch eingefärbt oder mit Mattierungsmitteln versehen werden. Zum Färben der Beschichtungen können Pigmente, insbesondere Ruße, Spinelle, Titanoxid, Aluminiumoxid oder Bariumsulfat, zugesetzt werden.

Das Beschichtungsmaterial kann Füllstoffe, Korrosionsschutzadditive, Korrosionsschutzpigmente, Phosphonsäure, Cersalze und/oder Metallsalze, insbesondere Zinksalze oder Eisensalze, enthalten.

Übliche Funktionalisierungen, wie antibakteriell, fotokatalytisch aktiv, rutschhemmend, usw. können durch handelsübliche Additive erreicht werden.

Ebenso können Additive zur Benetzung, der Erhöhung der Oberflächenenergie oder zur Erhöhung der Kratzfestigkeit eingesetzt werden.

Im Rahmen der Erfindung ist vorgesehen, dass die nicht funktionalisierten Silane ausgewählt sind aus der Gruppe bestehend aus 2-, 3- oder 4-fachen Alkoxysilanen ohne eine organische funktionelle Gruppe, insbesondere Methyltriethoxysilan (MTES), Tetraethoxysilan (TEOS), Phenyltriethoxysilan (PHTES), Propyltriethoxysilan (PTES), Dimethyldiethoxysilan (DMDES), Methyltrimethoxysilan (MTMS), Tetramethoxysilan (TEMOS), Tetra-n-propoxysilan, Tetra-n-butoxysilan, Phenyltrimethoxysilan (PHTMS), Propyltrimethoxysilan (PTMS), Dimethyldimethoxysilan (DMDMS), Isobutyltriethoxysilan, Isobutyltrimethoxysilan, Octyltriethoxysilan, Octyltrimethoxysilan, iso-Octyltriethoxysilan, iso-Octyltrimethoxysilan, Isooctyltriethoxysilan, Isooctyltrimethoxysilan, Hexadecyltrimethoxysilan , Hexadecyltriethoxysilan, 1,2-Bis(Triethoxysilyl)-ethan, 1,2-Bis(Trimethoxysilyl)-ethan, Trimethylethoxysilan, Trimethylmethoxysilan, (Cyclohexyl)methyldiethoxysilan, (Cyclohexyl)methyldimethoxysilan, Dicyclopentyldiethoxysilan, Dicyclopentyldimethoxysilan, Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, Dimethyldimethoxysilan, Diisopropyldimethoxysilan, Phenyimethyldimethoxysilan, Phenylethyltriethoxysilan, Phenylmethyldiethoxysilan, Phenyldimethylethoxysilan sowie Aminosilane, insbesondere (3-Aminopropyl)triethoxysilan (APTES), (3-Aminopropyl)trimethoxysilan (APTMS), 2-aminoethyl-3-amino-propyltrimethoxysilan (DAMO) sowie triamino-funktionales Propylmethoxysilan (TRIAMO).

Als Silikonharze können beispielsweise Methylsilikonharze, Phenylsilikonharze und Mischungen davon eingesetzt werden.

Erfindungsgemäß ist vorgesehen, dass die kationischen UV-Starter ausgewählt sind aus der Gruppe bestehend aus (4-Methylphenyl) [4-(2-methylpropyl)phenyl]iodoniumhexafluorophosphat, Triarylsulfonium-Hexafluorophosphat, Bis[4-diphenylsulfoniumphenyl]sulfide-bishexafluoroantimonat, Thiophenoxyphenylsulfoniumhexafluoroantimonat, Thiobis(4,1-phenylene)-S,S,S',S'-tetraphenyldisulfoniumbishexafluorophosphat, Diphenyl(4-phenylthiophenyl)sulfonium hexafluorophosphat, (4-{[4-(Diphenylsulfanylium)phenyl]sulfanyl}phenyl) diphenylsulfonium bishexafluorophosphat, (Thiodi-4,1-phenylene)-bis-(diphenylbis)(OC-6,1 1)hexafluoroantimonat, Diphenyl[4-(phenylthio)phenyl]sulfonium hexafluoroantimonat, Bis-(4-dodecylphenyl)iodoniumhexafluroantimonat, Thiobis(4,1-phenylene)-S,S,S',S'-tetraphenyldisulfonium bishexafluorophosphate; diphenyl(4-phenylthiophenyl)sulfonium hexafluorophosphat, Phenyl-p-octyloxyphenyl-iodonium-hexafluoroantimonat, Bis(dodecylphenyl)-iodoniumhexafluoro-antimonat, Bis-(4-methylphenyl)iodoniumhexafluorophosphat, Diphenyl(4-phenylthio)phenylsulfoniumhexafluoroantimonat und (Thio-4,1-phenyen)bis(diphenylsulfonium)dihexafluoroantimonat).

Es liegt im Rahmen der Erfindung, dass die anionischen UV-Starter ausgewählt sind aus der Gruppe bestehend aus Aryldiazoniumverbindungen oder Verbindungen vom Ketoprofen-Typ, wie 1,3-Di-4-piperidylpropandi(α-(2-benzoyl)phenylpropionat), 1,6-Hexamethylendiamindi(α-(2-benzoyl)phenylpropionat) und 9-DBU(2-Benzoyl)phenylpropionat.

Auf alkalischen Untergründen wie Beton können kationische UV-Starter nicht eingesetzt werden. Hier können aber die vorgenannten anionischen UV-Starter eingesetzt werden.

Alternativ dazu können der Beschichtung kationische Starter und Säuren oder Säureester zugesetzt werden, insbesondere
• Carbonsäuren, insbesondere Oxalsäure, Malonsäure, Bernsteinsäure, Glutarsäure, Adipinsäure, Azelainsäure, Sebacinsäure, 1,10-Decandisäure, 1,11-Undecandisäure 1,12-Dodecandisäure, Methansäure, Ethansäure, Propansäure, Butansäure, Pentansäure, Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Eicosansäure, Zitronensäure, Glykolsäure, Weinsäure, Ascorbinsäure, Milchsäure, Benzoesäure, Salicylsäure, Isophthalsäure, Terephthalsäure, Phthalsäure, Ethylhexansäure, 4,4-Bis-(4-hydroxy-phenyl)valeriansäure, Itaconsäure, Admerginsäure, Arcylsäure. Metharcylsäure, Maleinsäure, Fumarsäure
• Phosphorsäure,
• Phosphorsäureester,
• Sulfonsäuren oder
• Sulfonsäureester.

Die erfindungsgemäß erzeugten Beschichtungen können als
• Antifingerprintbeschichtungen auf Edelstahl, feueraluminiertem Stahl, verzinktem Stahl oder Normalstahl,
• als Betonversiegelung,
• Versiegelung von Schiefer, Kupfer, Messing, Edelstahl, feueraluminiertem Stahl, verzinktem Stahl, Normalstahl, Zinkblechen, Aluminium oder Magnesium,
• Easy-to-clean-Beschichtungen auf Holz, Papier, Pappe und Textilien,
• Photokatalytische Beschichtungen,
• IR-absorbierende Beschichtungen,
• Kratzfestbeschichtungen,
• Tribologische Beschichtungen,
• Entformungshilfsschichten,
• Antihaftbeschichtungen,
• Antireflexbeschichtungen,
• Korrosionsschutzbeschichtungen,
• Zunderschutzbeschichtungen pder
• dauerhaft hydrophile Beschichtungen
• elektrisch isolierende Beschichtungen auf Metallen, wie Aluminium, Kupfer, Nickel, Stahl oder Edelstahl
eingesetzt werden.

Im Rahmen der Erfindung liegt auch ein Verfahren zum UV-Härten von Beschichtungsmaterial, wobei das Beschichtungsmaterial nicht funktionalisierte Silanen, Mischungen von nicht funktionalisierten Silanen und Hydrolysaten von nicht funktionalisierten Silanen oder Mischungen von nicht funktionalisierten Silanen und Silikonharzen umfasst und dem Beschichtungsmaterial zwischen 1 Gew.-% und 10 Gew.-% kommerzielle kationische oder anionische UV-Starter zugesetzt werden.

Im Rahmen der Erfindung können beispielsweise die folgenden Silikonharze eingesetzt werden:
• Silikophen AC 900, Silikophen AC 1000, Silikophen P 50/X, Silikophen P 80/X, Silikophen P 80/MPA (alle von Evonik),
• Silres 601, Silres 602, Silres 603, Silres 604, Silres 610, Silres EP, Silres H 44, Silres H 62C, Silres HK 46, Silres HP 2000, Silres IC 232, Silres IC 368, Silres IC 836, Silres IC 900, Silres K, Silres KX, Silres MK, Silres BS 6920, Silres MSE 100, Silres REN 50, Silres REN 60, Silres REN 80, Silres REN 100, Silres REN 168, Silres REN 171, Silres REN 180 VP, Silres SY 231, Silres SY 300, Silres SY 409 (alle von Wacker)
• Silmer DTQ-75 (von Siltech).

Die Hydrolyse der Silane erfolgt im Allgemeinen durch wässrige Säure oder Laugen. Als Säuren können beispielsweise anorganische Säuren, wie Schwefelsäure, Phosphorsäure, Salpetersäure oder Salzsäure eingesetzt werden. Weiterhin können organische Säuren, wie Ameisensäure, Essigsäure, Oxalsäure oder Zitronensäure verwendet werden.

Die Hydrolyse erfolgt durch Lösen der Säuren je nach Säure und Säurestärke zwischen 0,1 Gew.-% bis 25 Gew.-% in Wasser und Zugabe unter Rühren zu den Silanen oder Silangemischen. Die Zugabemenge variiert zwischen 5 und 50 Gew.-% an wässriger Säurelösung zu den Silanen oder Silanmischungen. Die Hydrolysezeit variiert ebenso je nach eingesetzter Säure und Wassermenge. Man rührt immer bis der Klarpunkt erreicht ist, d.h. durch die Hydrolyse der Silane ein einphasiges Gemisch erreicht ist.

Besonders bevorzugt bei der Hydrolyse sind Hydrolysate zwischen 5 Gew.-% und 20 Gew.-% Säure zudem Silan/Silangemisch. Es hat sich gezeigt, dass in diesem Bereich sehr stabile Hydrolysate erhalten werden, die einen Flammpunkt > 60°C aufweisen und dadurch für viele interessante Anwendungen geeignet sind.

Die Zugabe der anionischen oder kationischen Starter erfolgt vor oder nach der Hydrolyse. Bevorzugt werden in säurehaltigen Hydrolysaten kationische Starter eingesetzt.

Die Menge der kationischen Starter erfolgt zwischen 1 bis 20 Gew.-% bevorzugt 2,5 bis 10 Gew.-% zugegeben.

Nachfolgend wird die Erfindung anhand von Ausführungsbeispielen erläutert.

### Ausführungsbeispiel 1:

7,0 g Dynasylan^{®} MTES (Fa. Evonik) werden mit 3,0 g Phenyltriethoxysilan versetzt und 0,5 g JRCure^{®} 4976 (Fa. TIANJIN JIURI NEW MATERIALS CO., LTD) versetzt. Das Material wird mit einer 10er Rakel auf Edelstahl appliziert und mit einer Quecksilberhochdrucklampe bei einer Strahlungsenergie von 750 mJ/cm² unterhalb 1 sec gehärtet. Man erhält eine sehr chemikalienbeständige transparente Beschichtung. Die Haftung ist ebenfalls sehr gut und die Härte liegt bei 5H Bleistifthärte.

### Ausführungsbeispiel 2:

7,0 g Dynasylan^{®} MTES (Fa. Evonik) werden mit 3,0 g Phenyltriethoxysilan und 1 g 10%ige Ameisensäure versetzt und gerührt. Nach ca. 2 h Rühren wird das einphasige Gemisch mit einem kationischen Starter 0,25 g BCH IS052 versetzt und weitere 10 min gerührt. Die anwendungsfertige Beschichtung wird auf ein PC Substrat gesprüht und mit einer Quecksilberhochdrucklampe bei einer Strahlungsenergie von 750 mJ/cm² unterhalb 1 sec gehärtet. Man erhält eine sehr chemikalienbeständige transparente Beschichtung. Die Haftung ist ebenfalls sehr gut und die Härte liegt bei 5H Bleistifthärte.

### Ausführungsbeispiel 3:

10,0 g Dimethyldiethyoxysilan und 1,0 g Phenyltriethoxysilan werden mit 1,2 g 1%iger Schwefelsäure hydrolysiert. Nach Ende der Hydrolyse werden 0,5 g Deuteron^{®} UV 1242 (Fa. Deuteron GmbH) hinzugesetzt. Die Beschichtungslösung wird mit einer 3 µm Rakel auf ein DIN A5 Stahlblech und mit einer Quecksilberhochdrucklampe bei einer Strahlungsenergie von 750 mJ/cm² unterhalb von 1 sec gehärtet. Man erhält einer Beschichtung mit sehr guter Antihaftwirkung.

### Ausführungsbeispiel 4:

8,0 g Dynasylan^{®} MTES (Fa. Evonik) werden mit 3,0 g Tetraethoxysilan versetzt und mit 1,1 g 10%iger Ameisensäure versetzt und etwa 1 h gerührt. In die einphasige Lösung werden 0,50 g Aerosil^{®} 300 (Fa. Evonik) gegeben und gerührt bis man eine homogene Lösung erhält. Die Mischung wird mit 0,50 g Deuteron^{®} UV 1240 (Fa. Deuteron GmbH) und 0,06 g Byk^{®} 3752 (Fa. Byk Chemie) versetzt und weitere 10 min gerührt. Die anwendungsfertige Beschichtung wird auf ein Stahlsubstrat gesprüht und mit einer Quecksilberhochdrucklampe bei einer Strahlungsenergie von 750 mJ/cm² unterhalb von 1 sec gehärtet. Man erhält eine sehr kratzfeste matte Beschichtung.

### Ausführungsbeispiel 5:

7,0 g Dynasylan^{®} MTES (Fa. Evonik) werden mit 3,0 g Phenyltriethoxysilan und 1 g 10%ige Ameisensäure versetzt und gerührt. Nach ca. 2 h Rühren wird das bis dahin einphasige Gemisch mit 0,50 g Deuteron^{®} UV 1242 (Fa. Deuteron GmbH) versetzt und weitere 10 min gerührt. Die anwendungsfertige Beschichtung wird mit einer Schaumstoffrolle auf ein Schiefersubstrat aufgerollt und mit einer Quecksilberhochdrucklampe bei einer Strahlungsenergie von 750 mJ/cm² unterhalb von 1 sec gehärtet. Man erhält eine sehr kratzfeste, transparente und UV-stabile Beschichtung für Anwendungen im Innen- und Außenbereich.

### Ausführungsbeispiel 6:

10,0 g Silikopon^{®} EF (Fa. Evonik) wird mit 0,50 g Deuteron^{®} UV 1250 versetzt und gut durchmischt. Die viskose Lösung wird mit einer 20 µm Rakel auf ein Edelstahlsubstrat appliziert und mit einer Quecksilberhochdrucklampe bei einer Strahlungsenergie von 750 mJ/cm² unterhalb von 1 sec gehärtet. Man erhält eine sehr gut haftende Beschichtung mit guten Antigraffitieigenschaften

### Ausführungsbeispiel 7:

5,0 g Silikopon^{®} EF (Fa. Evonik) und 5,0 g Dynasylan^{®} MTES (Fa. Evonik) werden mit 0,50 g Deuteron^{®} UV 1242 versetzt und gut durchmischt. Die viskose Lösung wird mit einer 20 µm Rakel auf ein Edelstahlsubstrat appliziert und mit einer LED-Lampe mit einer Wellenlänge von 385 nm unterhalb von 1 sec gehärtet. Man erhält eine sehr gut haftende Beschichtung mit hoher Kratzfestigkeit und guter Chemikalienstabilität.

### Ausführungsbeispiel 8:

5,0 g Silikopon^{®} EF (Fa. Evonik) und 5,0 g Dynasylan^{®} MTES (Fa. Evonik) werden mit und 1 g 10%iger Ameisensäure versetzt und gerührt. Nach ca. 2 h Rühren wird das bis dahin einphasige Gemisch mit 0,5 g Deuteron^{®} UV 1242 (Fa. Deuteron GmbH) versetzt und weitere 10 min gerührt. Die Lösung wird mit einer 20 µm Rakel auf ein Edelstahlsubstrat appliziert und mit einer Quecksilberhochdrucklampe bei einer Strahlungsenergie von 750 mJ/cm² unterhalb von 1 sec gehärtet. Man erhält eine sehr gut haftende Beschichtung mit hoher Kratzfestigkeit und guter Chemikalienstabilität.

### Ausführungsbeispiel 9:

10,0 g Silres^{®} MSE 100 (Fa. Wacker Chemie GmbH) wird mit 0,50 g Deuteron^{®} UV 1242 versetzt und gut durchmischt. Die Lösung wird mit einer 18 µm Rakel auf ein Edelstahlsubstrat appliziert und mit einer Quecksilberhochdrucklampe bei einer Strahlungsenergie von 750 mJ/cm² unterhalb von 1 sec gehärtet. Man erhält eine sehr gut haftende Beschichtung mit hoher Kratzfestigkeit.

### Ausführungsbeispiel 10:

5,0 g Silres^{®} MSE 100 und 5 g Silres MK Schuppen (Fa. Wacker Chemie GmbH) werden mit 1 g Dynasilan MTES und 1 g Phenyltriethoxysilan versetzt und gerührt bis sich alles gelöst hat. Danach gibt man 0,50 g Deuteron^{®} UV 1240 dazu und mischt gut durch. Die Lösung wird mit einer 5 µm Rakel auf ein Aluminiumsubstrat appliziert und mit einer Quecksilberhochdrucklampe bei einer Strahlungsenergie von 750 mJ/cm² unterhalb von 1 sec gehärtet. Man erhält eine sehr gut haftende Beschichtung mit hoher Kratzfestigkeit und Umformbarkeit.

### Ausführungsbeispiel 11:

5,0 g Silres^{®} MSE 100 und 5 g Silres MK Schuppen (Fa. Wacker Chemie GmbH) werden mit 1 g Dynasilan MTES und 1 g Phenyltriethoxysilan versetzt und gerührt bis sich alles gelöst hat. Danach gibt man 0,50 g BCH IS052, 0,5 g eines Phosphatesters Hordaphos CC MS (Fa. Clariant) und 0,2 g Ceridust 3715 (Fa. Clariant) dazu und mischt gut durch. Die Lösung wird mit einer Schaumstoffwalze auf Betonsteine appliziert und mit einer Quecksilberhochdrucklampe bei einer Strahlungsenergie von 2000 mJ/cm² unterhalb von 1 sec gehärtet. Man erhält eine sehr chemikalienbeständige und UV beständige Beschichtung mit hoher Kratzfestigkeit und Ausblühschutz.

### Ausführungsbeispiel 12:

5,0 g Silres^{®} MSE 100 und 5 g Silres MK Schuppen (Fa. Wacker Chemie GmbH) werden mit 1 g Dynasilan MTES und 1 g Phenyltriethoxysilan versetzt und gerührt bis sich alles gelöst hat. Danach gibt man 0,50 g BCH IS052, 0,5 g eines Phosphatesters Hordaphos CC MS (Clariant) und 0,2 g Ceridust 3715 (Fa. Clariant) dazu und mischt gut durch. Die Lösung wird mit einer Schaumstoffwalze auf Geopolymersteine appliziert und mit einer Quecksilberhochdrucklampe bei einer Strahlungsenergie von 2000 mJ/cm² unterhalb von 1 sec gehärtet. Man erhält eine sehr chemikalienbeständige und UV beständige Beschichtung mit hoher Kratzfestigkeit und Ausblühschutz.

### Ausführungsbeispiel 13:

5,0 g Silres^{®} MSE 100 und 5 g Silres MK Schuppen (Fa. Wacker Chemie GmbH) werden mit 1 g Dynasilan MTES und 1 g Phenyltriethoxysilan versetzt und gerührt bis sich alles gelöst hat. Zu der transparenten Lösung werden 4 g Printex G (Fa. Orion Engineered Carbons S.A) gegeben und 2 h mit einer Dissolverscheibe eingerührt. Danach gibt man 0,50 g Deuteron^{®} UV 1240 dazu und mischt gut durch. Die Lösung wird mit einer 5 µm Rakel auf ein Aluminiumsubstrat appliziert und mit einer Quecksilberhochdrucklampe bei einer Strahlungsenergie von 750 mJ/cm² unterhalb von 1 sec gehärtet. Man erhält eine sehr gut haftende schwarze Beschichtung mit hoher Kratzfestigkeit und Umformbarkeit.

### Ausführungsbeispiel 13:

5,0 g Silres^{®} MSE 100 und 5 g Silres MK Schuppen (Fa. Wacker Chemie GmbH) werden mit 1 g Dynasilan MTES und 1 g Phenyltriethoxysilan versetzt und gerührt bis sich alles gelöst hat. Zu der transparenten Lösung werden 4 g Printex G und 0,2 g Ceridust 3715 (Fa. Clariant) gegeben und 2 h mit einer Dissolverscheibe eingerührt. Danach gibt man 0,50 g Deuteron^{®} UV 1240 dazu und mischt gut durch. Die Lösung wird mit einer 5 µm Rakel auf ein Edelstahlsubstrat appliziert und mit einer Quecksilberhochdrucklampe bei einer Strahlungsenergie von 750 mJ/cm² unterhalb von 5 sec gehärtet. Man erhält eine sehr gut haftende schwarze Beschichtung mit hoher Kratzfestigkeit und Umformbarkeit.

## Patentansprüche

1. UV-härtbares Beschichtungsmaterial aus nicht funktionalisierten Silanen und/oder Hydrolysaten von nicht funktionalisierten Silanen und/oder Silikonharzen und/oder Silikonen mit über Resten an hydrolysierbaren Alkoxygruppen, **dadurch gekennzeichnet, dass** das Beschichtungsmaterial zwischen 1 Gew.-% und 10 Gew.-% kationische oder anionische UV-Starter enthält.

2. UV-härtbares Beschichtungsmaterial gemäß Anspruch 1, **dadurch gekennzeichnet, dass** die nicht funktionalisierten Silane ausgewählt sind aus der Gruppe bestehend aus 2-, 3- oder 4-fachen Alkoxysilanen ohne eine organische funktionelle Gruppe, insbesondere Methyltriethoxysilan (MTES), Tetraethoxysilan (TEOS), Phenyltriethoxysilan (PHTES), Propyltriethoxysilan (PTES), Dimethyldiethoxysilan (DMDES), Methyltrimethoxysilan (MTMS), Tetramethoxysilan (TEMOS), Tetra-n-propoxysilan, Tetra-n-butoxysilan, Phenyltrimethoxysilan (PHTMS), Propyltrimethoxysilan (PTMS), Dimethyldimethoxysilan (DMDMS), Isobutyltriethoxysilan, Isobutyltrimethoxysilan, Octyltriethoxysilan, Octyltrimethoxysilan, iso-Octyltriethoxysilan, iso-Octyltrimethoxysilan, Isooctyltriethoxysilan, Isooctyltrimethoxysilan, Hexadecyltrimethoxysilan , Hexadecyltriethoxysilan, 1,2-Bis(Triethoxysilyl)-ethan, 1,2-Bis(Trimethoxysilyl)-ethan, Trimethylethoxysilan, Trimethylmethoxysilan, (Cyclohexyl)methyldiethoxysilan, (Cyclohexyl)methyldimethoxysilan, Dicyclopentyldiethoxysilan, Dicyclopentyldimethoxysilan, Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, Dimethyldimethoxysilan, Diisopropyldimethoxysilan, Phenyimethyldimethoxysilan, Phenylethyltriethoxysilan, Phenylmethyldiethoxysilan Phenyldimethylethoxysilan sowie Aminosilane, insbesondere (3-Aminopropyl)triethoxysilan (APTES), (3-Aminopropyl)trimethoxysilan (APTMS), 2-aminoethyl-3-amino-propyltrimethoxysilan (DAMO) sowie triamino-funktionales Propylmethoxysilan (TRIAMO).

3. UV-härtbares Beschichtungsmaterial gemäß Anspruch 1, **dadurch gekennzeichnet, dass** die Silikonharze ausgewählt sind aus der Gruppe bestehend aus Methylsilikonharzen, Phenylsilikonharzen und Mischungen davon.

4. UV-härtbares Beschichtungsmaterial gemäß Anspruch 1, **dadurch gekennzeichnet, dass** die kationischen UV-Starter ausgewählt sind aus der Gruppe bestehend aus (4-Methylphenyl) [4-(2-methylpropyl)phenyl]iodoniumhexafluorophosphat, Triarylsulfonium-Hexafluorophosphat, Bis[4-diphenylsulfoniumphenyl]sulfide-bishexafluoroantimonat, Thiophenoxyphenylsulfoniumhexafluoroantimonat, Thiobis(4,1-phenylene)-S,S,S',S'-tetraphenyldisulfoniumbishexafluorophosphat, Diphenyl(4-phenylthiophenyl)sulfonium hexafluorophosphat, (4-{[4-(Diphenylsulfanylium)phenyl]sulfanyl}phenyl) diphenylsulfonium bishexafluorophosphat, (Thiodi-4,1-phenylene)-bis-(diphenylbis)(OC-6,11)hexafluoroantimonat, Diphenyl[4-(phenylthio)phenyl]sulfonium hexafluoroantimonat, Bis-(4-dodecylphenyl)iodoniumhexafluroantimonat, Thiobis(4,1-phenylene)-S,S,S',S'-tetraphenyldisulfonium bishexafluorophosphate; diphenyl(4-phenylthiophenyl)sulfonium hexafluorophosphat, Phenyl-p-octyloxyphenyl-iodonium-hexafluoroantimonat, Bis(dodecylphenyl)-odoniumhexafluoro-antimonat, Bis-(4-methylphenyl)iodoniumhexafluorophosphat, Diphenyl(4-phenylthio)phenylsulfoniumhexafluoroantimonat und (Thio-4,1-phenyen)bis(diphenylsulfonium)dihexafluoroantimonat).

5. UV-härtbares Beschichtungsmaterial gemäß Anspruch 1, **dadurch gekennzeichnet, dass** die anionischen UV-Starter ausgewählt sind aus der Gruppe bestehend aus Aryldiazoniumverbindungen oder Verbindungen vom Ketoprofen-Typ, wie 1,3-Di-4-piperidylpropandi(α-(2-benzoyl)phenylpropionat), 1,6-Hexamethylendiamindi(a-(2-benzoyl)phenylpropionat) und 9-DBU(2-Benzoyl)phenylpropionat.

6. Verfahren zum UV-Härten von Beschichtungsmaterial, wobei das Beschichtungsmaterial nicht funktionalisierte Silanen, Mischungen von nicht funktionalisierten Silanen und Hydrolysaten von nicht funktionalisierten Silanen oder Mischungen von nicht funktionalisierten Silanen und Silikonharzen umfaßt und dem Beschichtungsmaterial zwischen 1 Gew.-% und 10 Gew.-% kommerzielle kationische oder anionische UV-Starter zugesetzt werden.
